# EUROPÄISCHE PATENTSCHRIFT

(11) **EP 1 628 273 B1**
(45) Veröffentlichungstag und Bekanntmachung des Hinweises auf die Patenterteilung: **06.02.2008**
(21) Anmeldenummer: 05107340.1
(22) Anmeldetag: 10.08.2005
(51) Int. Cl.: G08B 25/10, G08B 25/00, G08B 26/00, H04L 12/28

(54) **Verfahren zur Inbetriebsetzung von funkbasierten Gefahrenmeldesystemen**
Method for putting into service hazard signalling systems
Procédé pour la mise en service de systèmes de signalisation de danger

(30) Priorität: 16.08.2004 DE 102004039675
(43) Veröffentlichungstag der Anmeldung: 22.02.2006
(73) Patentinhaber: SIEMENS AKTIENGESELLSCHAFT, 80333 München (DE)
(72) Erfinder: Schreyer, Karlheinz, 82515 Wolfratshausen (DE)

(56) Entgegenhaltungen:
- EP-A- 0 742 539
- WO-A-00/21053
- US-A1- 2003 152 041

## Beschreibung

Die Erfindung bezieht sich auf ein Verfahren zur Inbetriebsetzung von funkbasierten Gefahrenmeldesystemen, die in einer Zelle des Gefahrenmeldesystems eine Hauptstation mit einer Sende- und Empfangseinrichtung und periphere Elemente mit jeweils einer Sende- und Empfangseinrichtung aufweisen

Die US 2003/0152041 A1 beschreibt ein Verfahren mit Sensor/Aktuator-Einheiten in einem funkbetriebenen Netz. Die Sensor/Aktuator-Einheiten werden in einem Sensor/Aktuator-Netz installiert und hierarchisch mit einer Vielzahl von Einheiten-Ebenen und einem Cluster-Kopf-Netz angeordnet. Eine Einheiten-Identifizierungseinheit zum Initialisieren der Sensor-Einheiten und des Sensor-Einheiten-Netz. Die SensorEinheit wird für die Ausführung eines Auftrags aufgeweckt und später in einem Energiesparzustand versetzt.

Gefahrenmeldesysteme, bei denen Meldungen über Funk übertragen werden, bieten dem Anwender viele Vorteile. Die Gefahrenmeldesysteme umfassen dabei Meldesensoren als periphere Elemente, die im Fall einer detektierten Gefahr, zum Beispiel Brand oder Einbruch, eine Gefahrenmeldung über eine Funkverbindung an eine Zentrale oder Hauptstation (worunter auch Repeater verstanden werden sollen) übermitteln, in der zur Beseitigung der Gefahr weitere Maßnahmen, wie Alarmierung der Feuerwehr bzw. Polizei, eingeleitet werden.

Aus der EP 833288 ist ein Verfahren für Funkübertragung in einer Gefahrenmeldeanlage bekannt, bei dem Messdaten eines Meldesensors zur Zentraleinheit über weitere Meldesensoren als Zwischenstationen übertragen werden können, wenn eine direkte Funkverbindung zur Zentrale wegen einer zu geringen Funkreichweite nicht besteht oder gestört ist. Dafür ist eine feste hierarchische Verbindungsstruktur der Meldesensoren untereinander vorgesehen.

Aus EP 1282094 ist ein Verfahren zur Funkübertragung in einem Gefahrenmeldesystem bekannt, welches über Repeater arbeitet und dennoch stromsparend ausgelegt ist, so dass ein Batteriebetrieb möglich ist. Dabei werden die Empfangseinrichtungen zyklisch zu vorgegebenen Zeitpunkten eingeschaltet und sendewillige Teilnehmer senden eine Präambel, die dazu führt, dass die für den Empfang vorgesehenen Teilnehmer im Falle des Empfangs bis zum Ende der gesamten Präambel eingeschaltet bleiben und im Falle, dass keine Präambel empfangen wird, wieder ausgeschaltet werden. In der Präambel wird ein Zeitpunkt übermittelt, zu dem sich der Empfänger wieder einschaltet, um das eigentliche Datentelegramm zu empfangen.

Die Inbetriebsetzung solcher funkbasierter Gefahrenmeldesysteme weicht von der Inbetriebsetzung von verdrahteten Anlagen ab. Bei funkbasierten Gefahrenmeldesystemen fehlt der bei elektrisch verbundenen Anlagen prinzipiell vorhandene Draht als erstes Adressierelement. Bei kleinen Funksystemen, wie sie in der privaten Meldetechnik üblich sind, werden Montage und Inbetriebsetzung meistens von der gleichen Person ausgeführt. In großen Systemen, also bei gewerblichen Anlagen, möchte man diese beiden Aktionen aus Kostengründen aber trennen. Denn es hat sich als wirtschaftlich erwiesen, wenn zuerst ein Mitarbeiter, der keine profunde Kenntnisse der heute oft komplizierten Elektronik benötigt, die Gerätschaften montiert, ohne aber das System in Betrieb zu setzen. Die eigentliche Inbetriebsetzung wird in einem zweiten Schritt von einem geschulten Techniker durchgeführt. Dazu wird zuerst das zentrale Element (Gateway oder Hauptstation) in einen sog. Anmeldemodus gebracht. Anschließend werden die einzelnen Melder nacheinander am Gateway angemeldet. Nachdem alle Melder einer Zelle auf diese Weise registriert wurden, wird der Anmeldemodus beendet. Das kann manuell oder automatisch nach einer bestimmten Zeit oder wenn die Zelle voll ist, geschehen. Problematisch aber ist, dass der die Anmeldung Durchführende jeden Melder in die Hand nehmen muss. Gerade bei großen Anlagen fallen hier lange Wegezeiten an. Außerdem kann der Fall eintreten, dass der Inbetriebsetzer auf Leitern steigen muss, um an den einzelnen Meldern Einstellungen vorzunehmen oder die Energieversorgung der Melder einzuschalten.

Es ist daher die Aufgabe der Einfindung, ein Verfahren zur Inbetriebsetzung von funkbasierten Gefahrenmeldesystemen anzugeben, welches eine kostengünstigere und schnellere Inbetriebsetzung erlaubt.

Die Aufgabe wird erfindungsgemäß gelöst durch ein Verfahren der eingangs genannten Art mit den Merkmalen des Patentanspruchs 1.

Im erfindungsgemäßen Verfahren werden zuerst alle peripheren Elemente, beispielsweise Melder, montiert und mit Energie versorgt, was beispielsweise durch das Einlegen von Batterien geschehen kann. Der ungeschulte Monteur setzt so die Melder an ihren Platz. Erst der geschulte Inbetriebsetzer startet den eigentlichen Anmeldevorgang. Dafür startet die Hauptstation einen Anmeldevorgang, in dem sie die Anmeldeaufforderung aussendet und die peripheren Elemente sich nach Empfangen der Anmeldeaufforderung bei der Hauptstation anmelden. Auf diese Weise läuft der Anmeldevorgang der Melder vom eigentlichen Installationsprozess der Melder getrennt ab.

Um den Energieverbrauch der peripheren Elemente zu minimisieren, ist es vorgesehen, dass die peripheren Elemente in einen stromsparenden Arbeitsmodus betrieben werden, während die Anmeldeaufforderungen gesicht werden.

In einer vorteilhaften Ausgestaltung des Verfahrens gemäß der Patentansprüche 2 und 3 setzt sich das Verfahren fort, nachdem sämtliche Melder, die im Empfangsbereich der Hauptstation angeordnet sind, angemeldet wurden. Dafür fungiert eines der bereits angemeldeten peripheren Elemente als Zwischenstation, von der aus weiter entfernt liegende periphere Elemente angemeldet werden. Auf diese Art und Weise lässt sich zügig die Inbetriebsetzung einer großen Anzahl von peripheren Elementen bewerkstelligen. Ein einziger an der Hauptstation ausgelöster Befehl ermöglicht einen automatisch ablaufenden Prozess, an dessen Ende eine Vielzahl von peripheren Elementen angemeldet ist.

Ein möglichst einfaches Netz ergibt sich, wenn gemäß Anspruch 4 zunächst alle Zwischenstationen der ersten Stufe Anmeldeaufforderungen aussenden und noch nicht angemeldete periphere Elemente bei diesen angemeldet werden. Dadurch ist sichergestellt, dass der Weg zwischen den periphere Elementen und der Hauptstation möglichst kurz und damit störunanfällig wird.

Ein energiesparendes Verfahren ist gemäß Anspruch 5 beispielsweise dadurch gegeben, dass die peripheren Elemente ihre Empfangseinrichtung in regelmäßigen Zeitintervallen ein-und wieder ausschalten und sofern eine Anmeldeaufforderung ausgesendet wurde, zumindest teilweise eine darin enthaltene Präambel in diesem Zeitintervall empfangen wird. Die empfangene Präambel sorgt dafür, dass die Empfangseinrichtung des peripheren Elementes so lange eingeschaltet bleibt, bis die gesamte Anmeldeaufforderung empfangen wurde.

Eine weitere Ausgestaltung eines solchen energiesparenden Verfahrens ist gemäß Anspruch 6 dadurch sichergestellt, dass das eingeschaltete Zeitintervall lang genug ist, damit ein ganzes Telegramm einer Anmeldeaufforderung empfangen wird.

Ein vorteilhaftes Verfahren gemäß Anspruch 7 ist dadurch gegeben, dass sich zumindest ein Teil der peripheren Elemente vor dem eigentlichen Anmeldevorgang bereits gegenseitig synchronisiert und ein Cluster bildet. Von diesen peripheren Elementen des Clusters schaltet nur noch ein ausgezeichnetes peripheres Element seine Empfangseinrichtung häufig ein und aus, um die Anmeldeaufforderung zu empfangen. Die weiteren im Cluster befindlichen peripheren Elemente sparen somit die für die Empfangseinrichtung notwendige Energie ein.

Während des Anmeldevorgangs ist gemäß Anspruch 8 vorgesehen, dass den angemeldeten peripheren Elementen eine Zellenidentifikation und eine Adresse übermittelt wird, mit denen nach der Inbetriebsetzung das Gefahrenmeldesystem im Betrieb arbeitet.

Zur vorteilhaften Optimierung der Zellenstruktur ist gemäß Anspruch 9 vorgesehen, dass während der Anmeldung die Empfangsfeldstärken der gegebenenfalls verwendeten Stationen und der peripheren Elemente übermittelt werden. Dadurch können schlechte Verbindungen erkannt und gegebenenfalls durch Umstellung von Routinglisten verbessert werden.

Eine solche Optimierung der Zellenstruktur ist gemäß Anspruch 10 vorgesehen, sobald alle peripheren Elemente der Zelle bei der Hauptstation angemeldet wurden und danach durch die Hauptstation eine solche Optimierung erfolgt und die entsprechenden Daten, beispielsweise Routinglisten, an die peripheren Elemente verteilt werden.

Empfängt die Hauptstation oder eine Zwischenstation während der Inbetriebsetzung Signale von nicht zur Zelle gehörenden peripheren Elementen, erhalten diese eine negative Quittung. Auf diese Weise lassen sich auch große und komplexe Anlagen mit mehreren Zellen in einfacher Weise in Betrieb setzen. Ein solches Verfahren ist gemäß Anspruch 12 dadurch zu verbessern, dass den peripheren Elementen, die nicht zur Hauptstation gehören, mitgeteilt wird, dass sie sich bei folgenden Anmeldeauforderungen dieser Zelle nicht mehr melden sollen. Damit wird der Funkverkehr in dieser Zelle während der Inbetriebsetzung reduziert.

In der vorteilhaften Ausgestaltung des Verfahrens gemäß Anspruch 13 ist ferner vorgesehen, dass auch nach der Inbetriebsetzung periphere Elemente, für die dann festgestellt wird, dass sie eigentlich nicht zur Zelle gehören, wieder abgemeldet werden.

Anhand der Figuren der Zeichnung wird die Erfindung nun in einem Ausführungsbeispiel näher erläutet. Dabei zeigen
Figur 1 eine schematische Darstellung eines funkbasierten Gefahrenmeldesystems während der Sendung einer Anmeldeaufforderung durch die Hauptstation,
Figur 2 eine schematische Darstellung eines Gefahrenmeldesystems während der Anmeldung eines ersten periphere Elementes,
Figur 3 eine schematische Darstellung eines Gefahrenmeldesystems nach der Anmeldung sämtlicher peripherer Elemente im Empfangsbereich der Hauptstation,
Figur 4 eine schematische Darstellung eines Gefahrenmeldesystems bei der Aussendung einer Anmeldeaufforderung durch eine Zwischenstation erster Stufe,
Figur 5 eine schematische Darstellung eines Gefahrenmeldesystems nach der Anmeldung sämtlicher peripherer Elemente der zweiten Stufe,
Figur 6 eine schematische Darstellung eines Gefahrenmeldesystems nach erfolgter Zelloptimierung durch die Hauptstation, Figur 7 eine Darstellung des zeitlichen Verlaufs eines Telegramms zur Anmeldeaufforderung im Vergleich zu den Zeitintervallen, in denen die Empfangseinrichtung eines peripheren Elements ein- bzw. ausgeschaltet ist, wobei das eingeschaltete Zeitintervall des peripheren Elements bei Empfang einer Präambel angepasst wird und
Figur 8 eine Darstellung des zeitlichen Verlaufs eines Telegramms zur Anmeldeaufforderung im Vergleich zu den Zeitintervallen, in denen die Empfangseinrichtung eines peripheren Elements ein- bzw. ausgeschaltet ist, wobei die eingeschalteten Zeitintervalle lang genug sind, um die vollständige Anmeldeaufforderung zu empfangen.

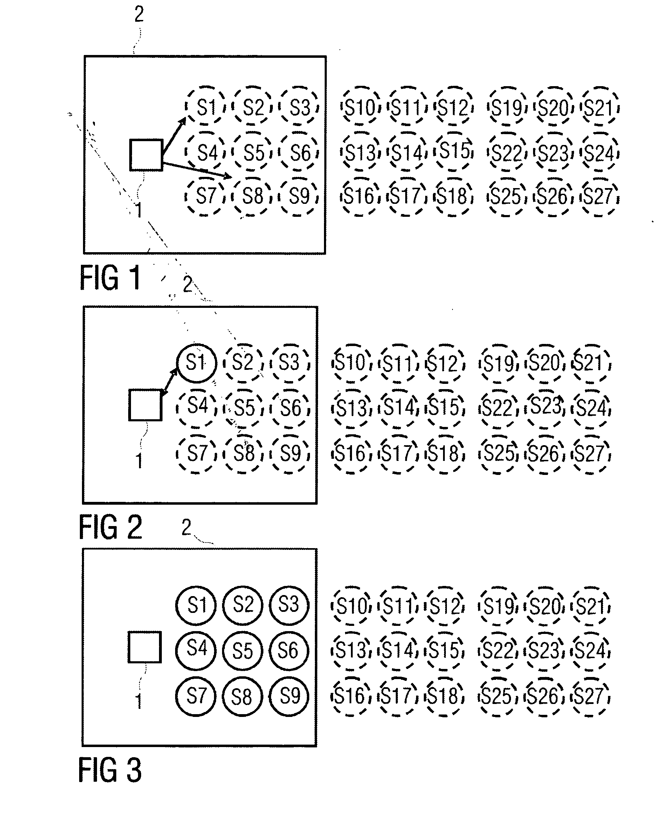

In Figur 1 ist schematisch ein funkbasiertes Gefahrenmeldesystem dargestellt, welches eine Hauptstation 1 mit einer nicht dargestellten Sende- und Empfangseinrichtung und insgesamt 27 periphere Elemente S1-S27 darstellt. Periphere Elemente sind in der Regel Melder, d.h. Brand- oder Einbruchsmelder, es kommen aber auch Bedienfelder, Steuerelemente oder Signalgeber in Betracht, in einer Zelle eines Gefahrenmeldesystems sind dabei bspw. über 100 periphere Elemente angeordnet. Die peripheren Elemente S1-S9 befinden sich dabei innerhalb eines Empfangsbereichs 2 der Hauptstation 1 und können daher mit dieser direkt in Verbindung treten. Beim Aufbau des Gefahrenmeldesystems werden nun zunächst durch einen Monteur die 27 peripheren Elemente montiert und mit einer Energieversorgung versehen, beispielsweise durch Einlegen einer Batterie. Durch die gestrichelte Darstellung sollen im folgenden solche peripheren Elemente S1 bis S27 dargestellt sein, die noch nicht angemeldet sind. Anschließend schalten die peripheren Elemente jeweils für vorgegebene Zeitintervalle ihre Empfangseinrichtungen ein und anschließend wieder aus. Während des eingeschalteten Zeitintervalles untersuchen die Empfangseinrichtungen, ob eine Anmeldeaufforderung von der Hauptstation 1 ausgesendet wird. Sobald alle peripheren Elemente S1 bis S27 montiert sind, kann die Inbetriebsetzung erfolgen. Dazu sendet die Hauptstation 1 die gewünschte Anmeldeaufforderung aus.

Die Anmeldeaufforderung kann dabei im sog. Broadcast an alle möglichen peripheren Elemente gleichzeitig ausgesendet werden oder gezielt an einzelne periphere Elemente. Die innerhalb des Empfangsbereichs 2 der Hauptstation 1 befindlichen peripheren Elemente S1 bis S9 empfangen die Anmeldeaufforderung und wie in Figur 2 exemplarisch am ersten peripheren Element S1 dargestellt, kommunizieren mit der Hauptstation 1, um die für die Anmeldung erforderlichen Daten auszutauschen. Empfangen mehrere periphere Elemente gleichzeitig eine Anmeldeaufforderung, auf welche sich diese peripheren Elemente grundsätzlich gleichzeitig durch Übertragung von Telegrammen anmelden würden, können an sich bekannte Verfahren zur Konfliktlösung verwendet werden (bspw. voreingestellte Zeitschlitze oder unterschiedliche Abwarte-Zeitintervalle vor der Antwort) für die peripheren Elemente, damit der Funkverkehr ohne Konflikte abläuft.

In der Regel wird die Hauptstation 1 an das periphere Element (im Beispiel S1) zumindest die Adresse des peripheren Elementes S1 und eine Zellidentifikation übertragen. Seitens des peripheren Elementes S1 kann an die Hauptstation 1 auch die Empfangsfeldstärke, mit der das Signal der Hauptstation 1 dort empfangen wurde, übertragen werden, um damit ein Maß für die Verbindungsqualität der Verbindung zwischen Hauptstation 1 und dem ersten peripheren Element S1 zu erhalten. Auf diese Weise werden sämtliche, innerhalb des Empfangsbereichs der Hauptstation 1 liegenden peripheren Elemente S1 bis S9 angemeldet.

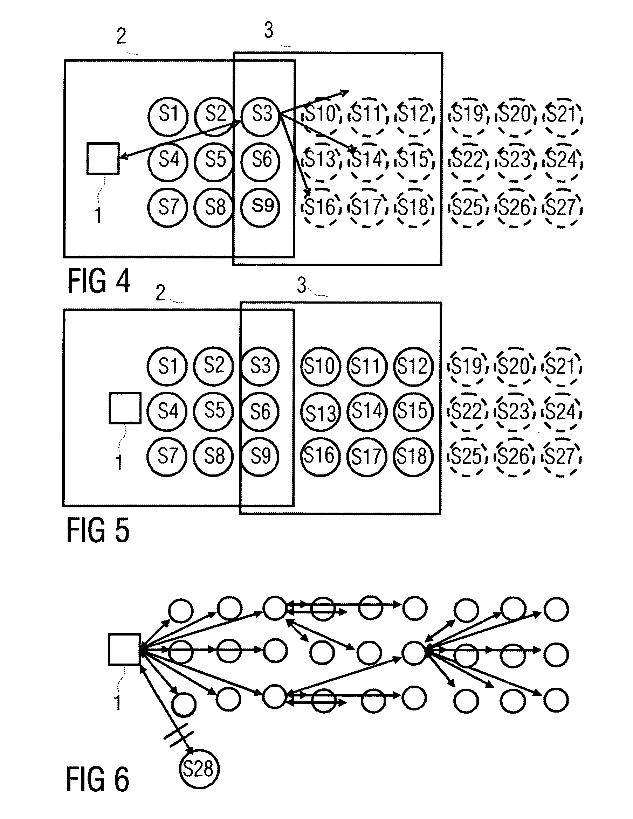

In Figur 4 ist dargestellt, wie nach Anmeldung sämtlicher peripherer Elemente S1 bis S9 innerhalb des Empfangsbereichs 2 der Hauptstation 1 nun ein ausgezeichnetes peripheres Element (in diesem Beispiel S3) von der Hauptstation 1 dazu aufgefordert wird, seinerseits eine Anmeldeaufforderung innerhalb eines zweiten Empfangsbereichs 3 des ausgezeichneten peripheren Elements S3 auszusenden. Das ausgezeichnete periphere Element S3 dient somit als Zwischenstation einer ersten Stufe, um die Kommunikation mit den innerhalb des Empfangsbereichs 3 befindlichen peripheren Elemente S10 bis S18 zu ermöglichen. In Figur 5 ist exemplarisch dargestellt, dass nach erfolgter Kommunikation der Zwischenstation S3 mit den peripheren Elementen S10 bis S18 sämtliche peripheren Elemente S1 bis S18 aus den Empfangsbereichen 2 und 3 angemeldet sind. Entsprechend wird vorgegangen, um anschließend auch die noch verbleibenden peripheren Elemente S19 bis S27 anzumelden.

Nach erfolgter Anmeldung sämtlicher peripherer Elemente S1 bis S27 lässt sich in der Hauptstation 1 aufgrund der übertragenen Informationen ermitteln, wie eine optimierte Zellstruktur auszusehen hat. In Figur 6 ist beispielsweise durch die unterschiedliche Schraffur (wobei aus Übersichtlichkeitsgründen auf die Bezugszeichen verzichtet wurde, es gilt die gleiche Nummerierung wie in den Figuren 1 bis5) dargestellt, dass die peripheren Elemente S1, S2, S3, S4, S5, S7 und S8 direkt mit der Hauptstation 1 kommunizieren, während die peripheren Elemente S10 bis S14 über die Zwischenstation S3 mit der Hauptstation 1 kommunizieren, die peripheren Elemente S15 bis S18 über die Zwischenstation S9 mit der Hauptstation 1 kommunizieren und die peripheren Elemente S19 bis S27 über die Zwischenstation 15, diese über die Zwischenstation S9 mit der Hauptstation 1 in Verbindung treten.

Auf diese Weise wird nach Aussenden eines Inbetriebsetzungsbefehls in Form der Anmeldeaufforderung seitens der Hauptstation 1 automatisch eine vollständige Anmeldung aller in der Zelle befindlichen peripheren Elemente S1 bis S27 sichergestellt. Befindet sich außerhalb der Zelle ein weiteres peripheres Element S28, welches nicht zur Zelle zugehörig ist, so kann, falls sich dieses auf die Anmeldeaufforderung meldet, mit Hilfe einer in der Hauptstation 1 abgespeicherten Liste festgestellt werden, dass das weitere periphere Element S28 nicht zur Zelle gehört und eine negative Quittung erhält. Das weitere periphere Element S28 kann damit auch an weiteren Anmeldebestätigungen gehindert werden, die es auf weitere Anmeldeaufforderungen der Zelle ansonsten aussenden würde. Weiterhin könnte vorgesehen sein, dass selbst im Falle einer erfolgten Anmeldung des weiteren peripheren Elementes S28 im Rahmen der Inbetriebsetzung anschließend eine Routine abläuft, die das weitere periphere Element S28 auch nachträglich aus der Zellstruktur entfernt.

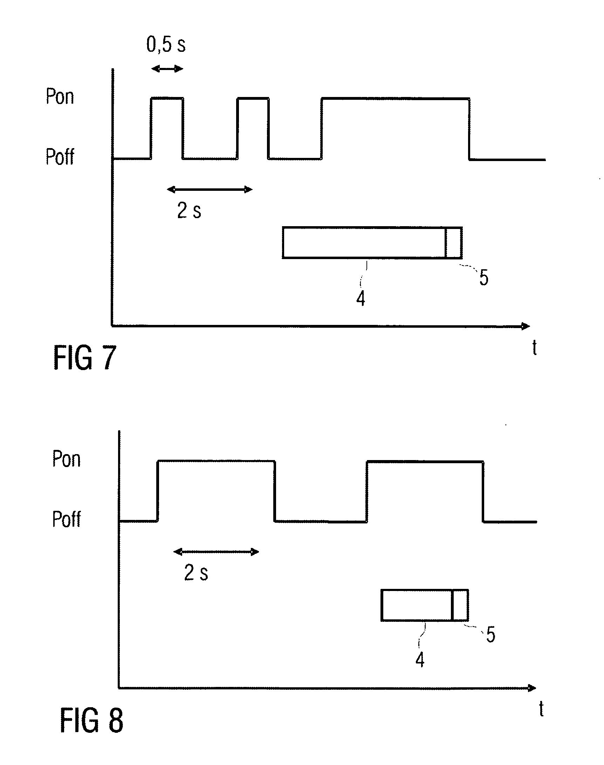

In Figur 7 ist exemplarisch dargestellt, wie in der Figur oben die Empfangseinrichtung eines peripheren Elementes ein-(Pon) und wieder aus (Poff) geschaltet wird. In diesem Beispiel wird in einem Zeitraum von einer halben Sekunde alle zwei Sekunden die Empfangseinrichtung ein- und wieder ausgeschaltet. Im Beispiel wird nun ein Anmeldevorgang durch die Hauptstation 1 dadurch gestartet, dass eine Anmeldeaufforderung, die aus einer Präambel 4 und einer eigentlichen Aufforderung 5 besteht, ausgesendet wird. Die Empfangseinrichtung des peripheren Elements empfängt die Präambel und lässt die Empfangseinrichtung so lange eingeschaltet, bis auch die eigentliche Aufforderung 5 empfangen wurde. Anschließend meldet sich das periphere Element bei der Hauptstation 1 an.

In Figur 8 ist eine weitere Möglichkeit zum Empfang der Anmeldeaufforderung 4,5 dargestellt. Dabei ist von vornherein die Länge der eingeschalteten Zeitintervalle so lang gewählt, dass das ganze Telegramm der Anmeldeaufforderung 4,5 vollständig im Zeitintervall empfangen wird.

Durch das erfindungsgemäße Verfahren wird der Anmeldevorgang der peripheren Elemente vom eigentlichen Installationsprozess getrennt. In der Zeit zwischen der Montage und der Anmeldung ist der Energieverbrauch der peripheren Elemente deutlich reduziert.

## Patentansprüche

1. Verfahren zur Inbetriebsetzung von funkbasierten Gefahrenmeldesystemen, die in einer Zelle des Gefahrenmeldesystems eine Hauptstation (1) mit einer Sende-und Empfangseinrichtung und periphere Elemente (S1...S27) mit jeweils einer Sende- und Empfangseinrichtung aufweisen, wobei die peripheren Elemente (S1...S27) des Gefahrenmeldesystems montiert und mit Energie versorgt werden, die peripheren Elemente in einem stromsparenden Arbeitsmodus betrieben werden, während die Anmeldeaufforderungen gesucht werden,
die Empfangseinrichtungen der peripheren Elemente (S1...S27) zumindest zeitweise eingeschaltet werden, um nach einer Anmeldeaufforderung zu suchen,
die Hauptstation (1) einen Anmeldevorgang startet, in dem sie die Anmeldeaufforderung (4,5) aussendet und
die peripheren Elemente (S1...S27) sich nach Empfang der Anmeldeaufforderung (4,5) bei der Hauptstation (1) anmelden.

2. Verfahren zur Inbetriebsetzung von funkbasierten Gefahrenmeldesystemen nach Anspruch 1,
**dadurch gekennzeichnet,**
**dass** ein bei der Hauptstation (1) angemeldetes peripheres Element (S1...S27) als Zwischenstation einer ersten Stufe fungiert und seinerseits eine weitere Anmeldeaufforderung aussendet,
**dass** noch nicht angemeldete periphere Elemente (S1...S27), die die weitere Anmeldeaufforderung empfangen, sich bei der Zwischenstation der ersten Stufe anmelden und
**dass** die weitere Kommunikation zwischen der Hauptstation (1) und bei der Zwischenstation angemeldeten peripheren Elemente über die Zwischenstation der ersten Stufe verläuft.

3. Verfahren zur Inbetriebsetzung von funkbasierten Gefahrenmeldesystemen nach Anspruch 2,
**dadurch gekennzeichnet,**
**dass** ein bei der Zwischenstation der ersten Stufe angemeldetes peripheres Element als Zwischenstation einer zweiten Stufe fungiert und seinerseits eine erneute Anmeldeaufforderung aussendet,
**dass** noch nicht angemeldete periphere Elemente, die die erneute Anmeldeaufforderung empfangen, sich bei der Zwischenstation der zweiten Stufe anmelden und
**dass** die weitere Kommunikation zwischen der Hauptstation (1) und dem bei der Zwischenstation der zweiten Stufe angemeldeten peripheren Element über die Zwischenstationen der ersten und der zweiten Stufe verläuft und
**dass** das Verfahren solange fortgesetzt wird bis sämtliche montierten peripheren Elemente bei einer Zwischenstation angemeldet sind.

4. Verfahren zur Inbetriebsetzung von funkbasierten Gefahrenmeldesystemen nach einem der Ansprüche 2 oder 3,
**dadurch gekennzeichnet,**
**dass** zunächst alle Zwischenstationen der ersten Stufe Anmeldeaufforderungen aussenden und noch nicht angemeldete periphere Elemente bei diesen angemeldet werden bevor die Zwischenstationen der zweiten Stufe Anmeldeaufforderungen aussenden.

5. Verfahren zur Inbetriebsetzung von funkbasierten Gefahrenmeldesystemen nach einem der Ansprüche 1 bis 4,
**dadurch gekennzeichnet,**
**dass** die peripheren Elemente (S1...S27) mit regelmäßigen Zeitintervallen Ihre Empfangseinrichtung ein- und wieder ausschalten,
**dass** eine Präambel (4) in der Anmeldeaufforderung ausgesendet wird, die ausreichend lang ist, dass diese zumindest teilweise im eingeschalteten Zeitintervall empfangen wird, **dass** die Empfangseinrichtungen der peripheren Elemente (S1...S27) nach Empfang zumindest eines Teils der Präambel (4) so lange eingeschaltet bleiben, bis die gesamte Anmeldeaufforderung (4,5) empfangen wurde.

6. Verfahren zur Inbetriebsetzung von funkbasierten Gefahrenmeldesystemen nach einem der Ansprüche 1 bis 5,
**dadurch gekennzeichnet,**
**dass** die peripheren Elemente (S1...S27) mit regelmäßigen Zeitintervallen Ihre Empfangseinrichtung ein- und wieder ausschalten, wobei das eingeschaltete Zeitintervall lang genug ist, dass ein ganzes Telegramm einer Anmeldeaufforderung (4,5) empfangen wird.

7. Verfahren zur Inbetriebsetzung von funkbasierten Gefahrenmeldesystemen nach einem der Ansprüche 1 bis 4,
**dadurch gekennzeichnet,**
**dass** zumindest ein Teil der peripheren Elemente (S1...S27) sich vor der eigentlichen Anmeldung gegenseitig synchronisiert und **dass** diese peripheren Elemente ein Cluster bilden,
**dass** von den peripheren Elementen eines Clusters nur noch ein ausgezeichnetes peripheres Element seine Empfangseinrichtung häufig ein- und ausschaltet, um die Anmeldeaufforderung zu empfangen.

8. Verfahren zur Inbetriebsetzung von funkbasierten Gefahrenmeldesystemen nach einem der Ansprüche 1 bis 7,
**dadurch gekennzeichnet,**
**dass** den angemeldeten peripheren Elementen (S1...S27) während der Anmeldung eine Zellenidentifikation und eine Adresse übermittelt wird.

9. Verfahren zur Inbetriebsetzung von funkbasierten Gefahrenmeldesystemen nach einem der Ansprüche 1 bis 8,
**dadurch gekennzeichnet,**
**dass** während der Anmeldung die Empfangsfeldstärken der gegebenenfalls verwendeten Zwischenstation und des peripheren Elements übermittelt werden.

10. Verfahren zur Inbetriebsetzung von funkbasierten Gefahrenmeldesystemen nach einem der Ansprüche 1 bis 9,
**dadurch gekennzeichnet,**
**dass** nachdem alle peripheren Elemente (S1...S27) angemeldet wurden durch die Hauptstation (1) eine Optimierung der Zellenstruktur erfolgt und die Daten an die peripheren Elemente (S1...S27) verteilt werden.

11. Verfahren zur Inbetriebsetzung von funkbasierten Gefahrenmeldesystemen nach einem der Ansprüche 1 bis 10,
**dadurch gekennzeichnet,**
**dass** periphere Elemente (S28), die nicht zur Hauptstation gehören, eine negative Quittung erhalten.

12. Verfahren zur Inbetriebsetzung von funkbasierten Gefahrenmeldesystemen nach Anspruch 11,
**dadurch gekennzeichnet,**
**dass** den peripheren Elementen (S28), die nicht zur Hauptstation (1) gehören, mitgeteilt wird, dass diese sich bei folgenden Anmeldeaufforderungen dieser Zelle nicht mehr melden sollen.

13. Verfahren zur Inbetriebsetzung von funkbasierten Gefahrenmeldesystemen nach einem der Ansprüche 1 bis 10,
**dadurch gekennzeichnet,**
**dass** periphere Elemente (S28), für die nach der Anmeldung festgestellt wird, dass sie nicht zur Zelle gehören, wieder abgemeldet werden.

## Claims

1. Method for the putting into service of radio-based hazard warning systems which feature in a cell of the hazard warning system a main station (1) with a transmit and receive device and peripheral elements (S1...S27) which each have a transmit and receive device, with the peripheral elements (S1...S27) of the hazard warning system being installed and supplied with energy, the peripheral elements being operated in a power-saving mode of operation while the registration requests are being sought the receive devices of the peripheral elements (S1...S27) being at least switched on for a time in order to search for a registration request,
the main station (1) starts a registration process in which the registration request (4, 5) is sent out and
the peripheral elements (S1...S27) register with the main station (1) after receiving the registration request (4, 5).

2. Method for putting into service radio-based hazard warning systems according to claim 1,
**characterised in that**
a peripheral element (S1...S27) registered with the main station (1) functions as an intermediate station of a first level and for its part sends out a further registration request,
that peripheral elements not yet registered (S1...S27), which receive the further registration request register with the intermediate station of the first level and
that the further communication between the main station (1) and peripheral elements registered with the intermediate station is undertaken or via the intermediate station of the first level.

3. Method for putting into service radio-based hazard warning systems according to claim 2,
**characterised in that**
a peripheral element registered with the intermediate station of the first level functions as an intermediate station of a second level and for its part sends out a new registration request,
not yet registered peripheral elements which receive the new registration request register with the intermediate station of the second level and
further communication between the main station (1) and the peripheral elements registered with the intermediate station of the second level is undertaken by intermediate stations of the first and the second level and the method is continued until such time as all installed peripheral elements have registered with an intermediate station.

4. Method for putting into service radio-based hazard warning systems according to one of the claims 2 or 3, **characterised in that**,
initially all intermediate stations of the first level send out registration requests and peripheral elements not yet registered with these are registered before the intermediate stations of the second level send out registration requests.

5. Method for putting into service radio-based hazard warning systems according to one of the claims 1 to 4, **characterised in that**,
the peripheral elements (S1...S27) switch their receiving device on and back off again at regular intervals,
a preamble (4) is sent out in the registration request which is sufficiently long for this to be at least partly received in the switched-on time interval, that the receive devices of the peripheral elements (S1...S27) after receiving at least a part of the preamble (4) remain switched on until such time as the entire registration request (4, 5) has been received.

6. Method for putting into service radio-based hazard warning systems according to one of the claims 1 to 5, **characterised in that**,
the peripheral elements (51...527) switch their receive device on and off again at regular intervals, with the switch-on interval being long enough for an entire telegram of a registration request (4, 5) to be received.

7. Method for putting into service radio-based hazard warning systems according to one of the claims 1 to 4, **characterised in that**,
at least some of the peripheral elements (S1...S27) synchronise with each other before the actual registration and that these peripheral elements form a cluster,
of the peripheral elements of a cluster only one selected peripheral element frequently switches on and off its receive device in order to receive the registration request.

8. Method for putting into service radio-based hazard warning systems according to one of the claims 1 to 7, **characterised in that**,
a cell identification and an address are transferred to the registered peripheral elements (S1...S27) during the registration.

9. Method for putting into service radio-based hazard warning systems according to one of the claims 1 to 8, **characterised in that**,
during the registration the receive field strength of any intermediate station used and of the peripheral element are transferred.

10. Method for putting into service radio-based hazard warning systems according to one of the claims 1 to 9, **characterised in that**,
after all peripheral elements (S1...S27) have been registered, an optimization of the cell structure is undertaken by the main station (1) and the data is distributed to the peripheral elements (S1 ... S27).

11. Method for putting into service radio-based hazard warning systems according to one of the claims 1 to 10, **characterised in that**,
peripheral elements (S28) which do not belong to the main station receive a negative acknowledgement.

12. Method for putting into service radio-based hazard warning systems according to claim 11,
**characterised in that**
the peripheral elements (S28) which do not belong to the main station (1) are informed that they are no longer to register in the subsequent registration requests of this cell.

13. Method for putting into service radio-based hazard warning systems according to one of the claims 1 to 10, **characterised in that**,
peripheral elements (S28) for which it is established after registration that they do not belong to the cell are deregistered again.

## Revendications

1. Procédé de mise en service de systèmes de signalisation de danger basés sur la radio et comportant dans une cellule du système de signalisation de danger une station principale (1) avec un dispositif d'émission et de réception et des éléments périphériques (S1 à S27) avec chacun un dispositif d'émission et de réception, les éléments périphériques (S1 à S27) du système de signalisation de danger étant montés et alimentés en énergie, les éléments périphériques étant exploités dans un mode de travail économique en courant pendant que les invitations à s'enregistrer sont cherchées, les dispositifs de réception des éléments périphériques (S1 à S27) étant mis en circuit au moins de temps en temps pour chercher une invitation à s'enregistrer,
la station principale (1) démarrant une opération d'enregistrement dans laquelle elle émet l'invitation à s'enregistrer (4, 5) et
les éléments périphériques (S1 à S27) après la réception de l'invitation à s'enregistrer (4, 5) s'enregistrant auprès de la station principale (1).

2. Procédé pour la mise en service de systèmes de signalisation de danger basés sur la radio selon la revendication 1,
**caractérisé par le fait que**
un élément périphérique (S1 à S27) enregistré auprès de la station principale (1) fait office de station intermédiaire d'un premier niveau et émet de son côté une autre invitation à s'enregistrer,
des éléments périphériques (S1 à S27) non encore enregistrés qui reçoivent l'autre invitation à s'enregistrer s'enregistrent auprès de la station intermédiaire du premier niveau, et
l'autre communication entre la station principale (1) et des éléments périphériques enregistrés auprès de la station intermédiaire se déroule par l'intermédiaire de la station intermédiaire du premier niveau.

3. Procédé pour la mise en service de systèmes de signalisation de danger basés sur la radio selon la revendication 2,
**caractérisé par le fait que**
un élément périphérique enregistré auprès de la station intermédiaire du premier niveau fait office de station intermédiaire d'un deuxième niveau et émet de son côté une nouvelle invitation à s'enregistrer,
des éléments périphériques non encore enregistrés qui reçoivent la nouvelle invitation à s'enregistrer s'enregistrent auprès de la station intermédiaire du deuxième niveau, et
l'autre communication entre la station principale (1) et des éléments périphériques enregistrés auprès de la station intermédiaire du deuxième niveau se déroule par l'intermédiaire des stations intermédiaires du premier niveau et du deuxième niveau, et
le procédé se poursuit jusqu'à ce que tous les éléments périphériques montés se soient enregistrés auprès d'une station intermédiaire.

4. Procédé pour la mise en service de systèmes de signalisation de danger basés sur la radio selon l'une des revendications 2 ou 3,
**caractérisé par le fait que**
toutes les stations intermédiaires du premier niveau émettent d'abord des invitations à s'enregistrer et des éléments périphériques non encore enregistrés s'enregistrent auprès de celles-ci avant que les stations intermédiaires du deuxième niveau émettent des invitations à s'enregistrer.

5. Procédé pour la mise en service de systèmes de signalisation de danger basés sur la radio selon l'une des revendications 1 à 4,
**caractérisé par le fait que**
les éléments périphériques (S1 à S27) mettent leur dispositif de réception en circuit et hors circuit à intervalles réguliers,
un préambule (4) est émis dans l'invitation à s'enregistrer, lequel est suffisamment long pour être reçu au moins en partie pendant l'intervalle de temps de mise en circuit, et
les dispositifs de réception des éléments périphériques (S1 à S27) restent en circuit après la réception d'au moins une partie du préambule (4) jusqu'à ce que la totalité de l'invitation à s'enregistrer (4, 5) ait été reçue.

6. Procédé pour la mise en service de systèmes de signalisation de danger basés sur la radio selon l'une des revendications 1 à 5,
**caractérisé par le fait que**
les éléments périphériques (S1 à S27) mettent leur dispositif de réception en circuit et hors circuit à intervalles réguliers, l'intervalle de temps de mise en circuit étant suffisamment long pour que tout un télégramme d'une invitation à s'enregistrer (4, 5) soit reçu.

7. Procédé pour la mise en service de systèmes de signalisation de danger basés sur la radio selon l'une des revendications 1 à 4,
**caractérisé par le fait que**
au moins une partie des éléments périphériques (S1 à S27) se synchronise mutuellement avant l'enregistrement proprement dit et ces éléments périphériques forment un groupe, et
parmi les éléments périphériques d'un groupe, un seul élément périphérique choisi met fréquemment son dispositif de réception en circuit et hors circuit pour recevoir l'invitation à s'enregistrer.

8. Procédé pour la mise en service de systèmes de signalisation de danger basés sur la radio selon l'une des revendications 1 à 7,
**caractérisé par le fait que**
une identification de cellule et une adresse sont transmises pendant l'enregistrement aux éléments périphériques enregistrés (S1 à S27).

9. Procédé pour la mise en service de systèmes de signalisation de danger basés sur la radio selon l'une des revendications 1 à 8,
**caractérisé par le fait que**,
pendant l'enregistrement, les intensités de champ de réception de la station intermédiaire éventuellement utilisée et de l'élément périphérique sont transmises.

10. Procédé pour la mise en service de systèmes de signalisation de danger basés sur la radio selon l'une des revendications 1 à 9,
**caractérisé par le fait que**,
après que tous les éléments périphériques (S1 à S27) ont été enregistrés, une optimisation de la structure cellulaire est effectuée par la station principale (1) et les données sont distribuées aux éléments périphériques (S1 à S27).

11. Procédé pour la mise en service de systèmes de signalisation de danger basés sur la radio selon l'une des revendications 1 à 10,
**caractérisé par le fait que**
des éléments périphériques (S28) qui n'appartiennent pas à la station principale reçoivent une confirmation négative.

12. Procédé pour la mise en service de systèmes de signalisation de danger basés sur la radio selon la revendication 11,
**caractérisé par le fait que**
les éléments périphériques (S28) qui n'appartiennent pas à la station principale (1) sont informés du fait qu'ils ne doivent plus se signaler lors des invitations à s'enregistrer suivantes de cette cellule.

13. Procédé pour la mise en service de systèmes de signalisation de danger basés sur la radio selon l'une des revendications 1 à 10,
**caractérisé par le fait que**
des éléments périphériques (S28) pour lesquels il a été constaté après l'enregistrement qu'ils n'appartiennent pas à la cellule sont désinscrits.
